# EUROPEAN PATENT APPLICATION

(11) **EP 1 715 670 A1**
(43) Date of publication of application: **25.10.2006**
(21) Application number: 06008304.5
(22) Date of filing: 21.04.2006
(51) Int. Cl.: H04N 1/00

(54) **Sheet transport speed control in duplex color image forming apparatus**

(30) Priority: 22.04.2005 JP 2005124357; 22.04.2005 JP 2005124358; 25.04.2005 JP 2005125907; 25.04.2005 JP 2005125906
(71) Applicant: SEIKO EPSON CORPORATION, Shinjuku-ku, Tokyo 163-0811 (JP)
(72) Inventor: Tanjo, Toru Seiko Epson Corporation, Suwa-shi Nagano 392-8502 (JP); Taguchi, Keiichi Seiko Epson Corporation, Suwa-shi Nagano 392-8502 (JP); Nishimura, Yoshiteru Seiko Epson Corporation, Suwa-shi Nagano 392-8502 (JP)
(74) Representative: HOFFMANN EITLE

(57) **Abstract**

An image forming apparatus includes a first path (16), adapted to transport a medium; an image former (20), disposed in the first path, and operable to form an image on the medium transported therethrough; a second path (17), adapted to transport the medium, which has once passed through the image former, while turning inside out, thereby allowing the medium to pass through the image former again; and a transport controller, operable to transport the medium with a first speed when the medium first passes through the image former (20), and to transport the medium in the second path (17) with a second speed lower than the first speed, in a case where the image to be formed on the medium which has passed through the second path is a multiple color image.

## Description

### BACKGROUND OF THE INVENTION

The present invention relates to an image forming apparatus for forming monochrome (single-color) or color images on both faces of a sheet (such as an ordinary sheet, a cardboard, a postcard, a mailing envelope, an OHP sheet, or any other sheet-like recording medium). Particularly it relates to an art of returning a sheet for forming images on both faces of the sheet.

There has been heretofore known a related image forming apparatus which can form monochrome or color images on both faces of a sheet and in which the speed of transport of the sheet at any time except the time of image forming and image transferring is set to be higher than the speed of paper transport at the time of forming or transferring an image on the sheet (e.g. see JP-A-2003-50528).

In a related image forming apparatus which includes: an image forming portion for forming a monochrome image part on an intermediate transfer member with every rotation of the intermediate transfer member or superposing multiple color image parts on the intermediate transfer member with a plurality of rotations of the intermediate transfer member to thereby form a color image on the intermediate transfer member; a transfer portion by which the image formed on the intermediate transfer member by the image forming portion is transferred onto a sheet; and a fixing portion through which the sheet with the image transferred by the transfer portion passes to fix the image on the sheet, wherein the sheet having passed thorough the fixing portion is switched back to a return path and returned to the transfer portion so that an image can be also transferred onto the other face of the sheet, it is impossible to supply the sheet to the transfer portion before the multiple color image parts are superposed on the intermediate transfer member with a plurality of rotations of the intermediate transfer member even if the speed of transport of the sheet at any time except the time of image transferring, etc. is set to be higher as in the related art to raise the return speed of the sheet at the time of color image forming. Accordingly, the sheet must be on standby in the return path before the multiple color image parts are superposed on the intermediate transfer member.

For this reason, the waiting time period of the sheet (the stop time period of the sheet) in the return path to supply the sheet to the transfer portion becomes longer as the return speed of the sheet becomes higher.

When the stop time period of the sheet in the return path becomes long, the time period of local contact between the sheet having passed through the fixing portion so as to be heated at a high temperature and constituent members (such as guide members, a pair of return rollers for transporting the sheet, etc.) of the return path, especially, the time period of contact between the sheet and the pair of return rollers for returning and nipping the sheet becomes long. As a result, heat of the sheet is radiated greatly in the contact portion compared with the other portion, so that the temperature of the sheet is lowered.

It has been found that the temperature of a sheet has influence on electrostatic charging characteristic and fixing characteristic, and that image quality is lowered because of gloss irregularly in the image transferred and fixed on the sheet if a local temperature difference is on the sheet.

### SUMMARY

It is therefore an object of the invention to provide an image forming apparatus in which the aforementioned problem can be solved to lower gloss irregularity at the time of color image forming.

In order to achieve the object, according to the invention, there is provided an image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again; and
a transport controller, operable to transport the medium with a first speed when the medium first passes through the image former, and to transport the medium in the second path with a second speed lower than the first speed, in a case where the image to be formed on the medium which has passed through the second path is a multiple color image.

The image forming may further includs a gate roller, disposed between the image former and a connecting point of the first path and a downstream end of the second path in a direction in which the medium is transported in the second path, the gate roller operable to control a timing that the medium is transported to the image former. The transport controller may be operable to transport the medium with the first speed, before the medium which has entered the second path passes the gate roller again.

The second speed may be variable.

In order to achieve the object, according to the invention, there is also provided an image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again; and
a transport controller, operable to transport the medium through the second path while stopping intermittently, in a case where the image to be formed on the medium which has passed though the second path is a multiple color image.

The image forming apparatus further include an ejection tray, adapted to receive the medium ejected from the first path. The transport controller may be operable to eject a part of the medium which has once passed through the image former to the ejection tray, and to continuously pull the medium into the second path such an extent that a user cannot access the ejected part of the medium.

A time period for which the medium is stopped at a downstream part in the second path in a direction in which the medium is transported in the second path may be longer than a time period for which the medium is stopped at an upstream part in the second path in the direction.

In order to achieve the object, according to the invention, there is also provided an image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again;
an ejection tray, adapted to receive the medium ejected from the first path; and
a transport controller, operable:
   to transport the medium with a first speed when the medium first passes through the image former;
   to eject a part of the medium which has once passed through the image former to the ejection tray, and to continuously pull the medium into the second path with the first speed such an extent that a user cannot access the ejected part of the medium; and
   to transport the medium in the second path with a second speed lower than the first speed,
in a case where the image to be formed on the medium which has passed through the second path is a multiple color image.

The image forming apparatus may further include a gate roller, disposed between the image former and a connecting point of the first path and a downstream end of the second path in a direction in which the medium is transported in the second path, the gate roller operable to control a timing that the medium is transported to the image former. The transport controller may be operable to transport the medium with the first speed, before the medium which has entered the second path passes the gate roller again.

The second speed may be variable.

In order to achieve the object, according to the invention, there is also provided an image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again;
a pair of rollers, disposed in the second path, and adapted to nip the medium transported therethrough, the rollers being separatable from each other; and
a transport controller, operable to stop the medium within the second path for a predetermined time period while separating the rollers from each other, in a case where the image to be formed on the medium which has passed through the second path is a multiple color image.

### BRIEF DESCRIPTION OF THE DRAWINGS

Fig. 1A is a timing chart showing a comparative example for a first embodiment of the invention, and Figs. 1B, 1C and 1D are timing charts showing the first embodiment.
Fig. 2A is a timing chart showing a comparative example for a second embodiment of the invention, and Figs. 2B and 2C are timing charts showing the second embodiment.
Fig. 3A is a timing chart showing a comparative example for a third embodiment of the invention, and Figs. 3B and 3C are timing charts showing the third embodiment.
Fig. 4A is a timing chart showing a comparative example for a fourth embodiment of the invention, and Fig. 4B is a timing chart showing the fourth embodiment.
Fig. 4C and 4D are views for explaining the configuration and operation of a separating mechanism 100.
Fig. 5 is a schematic front view showing the internal structure of the embodiments according to the invention.

### DETAIL DESCRIPTION OF PREFERRED EMBODIMENTS

Embodiments of an image forming apparatus according to the invention will be described below with reference to the drawings.

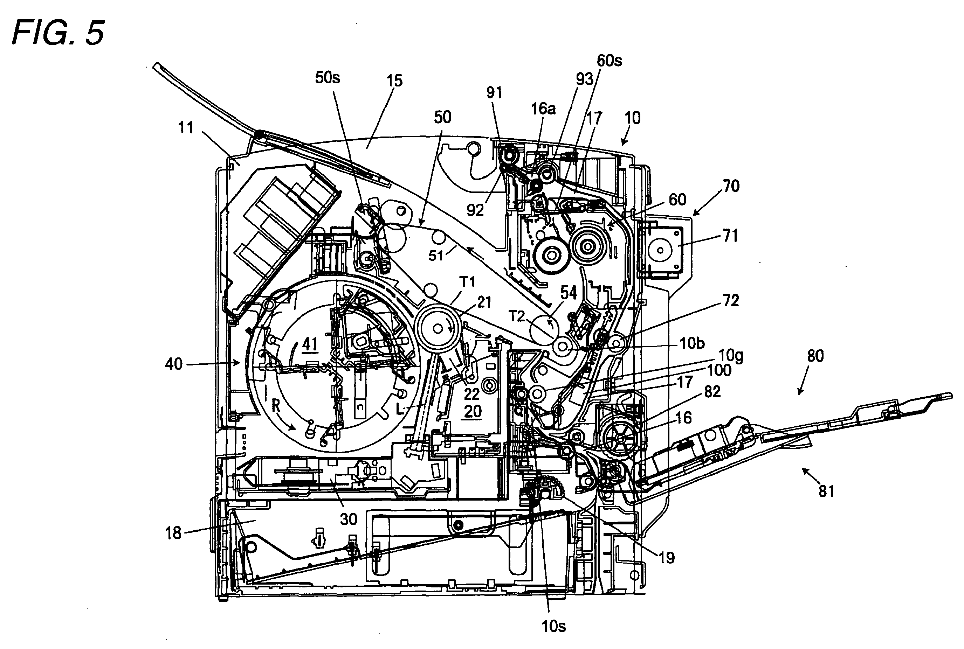

The image forming apparatus shown in Fig. 5 is a color image forming apparatus for forming monochromatic (single-color) or full-color images on both faces of an A4-size (or letter-size) sheet while longitudinally feeding the sheet. The image forming apparatus includes a casing 11, an image carrier unit 20, an exposure unit 30, and a developer unit 40. These units 20, 30 and 40 are put in the casing 11. The image forming apparatus further includes an intermediate transfer unit 50, and a fixing unit 60.

A body 10 of the apparatus has a frame not shown. The frame is provided in the casing 11 so that the respective units are attached to the frame.

The image carrier unit 20 has a photoconductor drum 21, and a corona charger (scorotron charger) 22. The photoconductor drum 21 has a photosensitive layer as its outer circumferential surface. The corona charger 22 serves as a charging means for electrostatically charging the outer circumferential surface of the photoconductor drum 21 evenly. The outer circumferential surface of the photoconductor drum 21 electrostatically charged evenly by the corona charger 22 is selectively exposed to a laser beam L emitted from the exposure unit 30, so that an electrostatic latent image is formed. The developer unit 40 applies toner as a developing agent to the electrostatic latent image to thereby form a visual image (toner image). The toner image is primarily transferred onto an intermediate transfer belt 51 that is the intermediate transfer member of the intermediate transfer unit 50 by a primary transfer portion T1. The toner image is further secondarily transferred onto a sheet that is a subject of transferring by a secondary transfer portion T2.

A transport path 16 and a return path 17 are provided in the casing 11. The transport path 16 is provided so that the sheet fed to the secondary transfer portion T2 and having an image formed on one of the both faces of the sheet by the secondary transfer portion T2 is transported toward a paper ejection portion (paper ejection tray) 15 provided in an upper surface of the casing 11. The return path 17 is provided so that the sheet transported toward the paper ejection portion 15 through the transport path 16 is switched back and returned to the secondary transfer portion T2 to form an image on the other face of the sheet.

The reference numeral 70 designates a double side unit which is formed so as to be attachable/detachable to/from the apparatus body. When the double side unit 70 is attached to the apparatus body, the return path 17 is completed.

The reference numeral 71 designates a drive motor for returning the sheet. The reference numeral 72 designates a pair of return rollers (for returning the sheet) which are driven by the motor 71 through a drive mechanism (not shown) such as a timing belt.

A paper supply cassette 18 in which a plurality of sheets are stacked and held is provided in a lower portion of the casing 11. A paper feed roller 19 is provided so that the sheets are one by one fed toward the secondary transfer portion T2.

A multi-purpose tray 81 which forms a manual paper feed portion 80 is provided below the double side unit 70. A paper feed roller 82 is provided in the apparatus body so that sheet set in the multi-purpose tray 81 are fed one by one.

A pair of gate rollers 10g are disposed at an upstream side of the secondary transfer portion T2 in the transport path 16. The position of the pair of gate rollers 10g is arranged between the secondary transfer portion T2 and a lower side connecting point of the transport path 16 and the return path 17. When a sheet is to be fed to the secondary transfer portion T2, a leading end of the sheet abuts against the pair of gate rollers 10g so that flexibility of the sheet is used for setting the leading end of the sheet to a predetermined position (preventing the sheet from moving obliquely, that is, a skew removal) and deciding the timing of sheet supply to the secondary transfer portion T2.

The developer unit 40 is a rotary developer unit in which color developer cartridges (not shown) containing yellow toner, cyan toner, magenta toner and black toner respectively are mounted so as to be demountable from a rotation body 41. When the rotation body 41 rotates in the direction of the arrow R at intervals of 90°, developing rollers (not shown) included in the developer cartridges respectively are made to abut on the photoconductor drum 21 selectively so that a surface of the photoconductor drum 21 can be developed selectively.

The exposure unit 30 generates the laser beam L toward the photoconductor drum 21.

The intermediate transfer unit 50 has a unit frame not shown, and the intermediate transfer belt 51 which is wound around a drive roller 54 and a plurality of follower rollers, rotatably supported by the frame, and is stretched. The intermediate transfer belt 51 is driven to circulate in the direction of the arrow shown in Fig. 5. The primary transfer portion T1 is formed in a portion in which the photoconductor drum 21 and the intermediate transfer belt 51 abut on each other. The secondary transfer portion T2 is formed in a portion in which the drive roller and the secondary transfer roller 10b provided on the body side are brought into pressure contact with each other.

The secondary transfer roller 10b can be connected/disconnected to/from the drive roller 54 (i.e. to/from the intermediate transfer belt 51). When the secondary transfer roller 10b is brought into contact with the drive roller 54, the secondary transfer portion T2 is formed.

Accordingly, for formation of a color image, a monochrome image part is formed on the intermediate transfer belt 51 with every rotation of the intermediate transfer belt 51 in the condition that the secondary transfer roller 10b is disconnected from the intermediate transfer belt 51. Multiple color image parts are superposed on the intermediate transfer belt 51 with a plurality of rotations of the intermediate transfer belt 51, so that a color image is formed on the intermediate transfer belt 51. Then, the secondary transfer roller 10b is made to abut on the intermediate transfer belt 51. The sheet is supplied to the portion (secondary transfer portion T2) of contact between the secondary transfer roller 10b and the intermediate transfer belt 51, so that the color image (toner image) is (secondarily) transferred from the intermediate transfer belt 51 onto the sheet.

The sheet with the toner image transferred thereon passes through the fixing unit 60, so that the toner image is melted and fixed. The sheet is then ejected toward the paper ejection tray 15.

The image forming apparatus further includes a pair of paper ejection rollers 91 and 92 and a pair of switchback rollers 93. The pair of paper ejection rollers 91 and 92 eject the sheet onto the paper ejection tray 15 after passage of the sheet through the fixing unit 60. The pair of switchback rollers 93 are provided between the fixing unit 60 and the pair of paper ejection rollers 91 and 92 for switching back the sheet having passed through the fixing unit 60 to return the sheet to the image forming portion including the photoconductor drum 21 etc.

The pair of switchback rollers 93 are provided in a paper ejection path 16a which extends from the fixing unit 60 toward the pair of paper ejection rollers 91 and 92. The sheet is switched back in such a manner that the pair of paper ejection rollers 91 and 92 and the pair of switchback rollers 93 are rotated reversely to supply the sheet by the drive motor 71 to the return path 17 just before a trailing end of the sheet passes through a nip portion between the pair of switchback rollers 93.

The sheet supplied to the return path 17 is transported by the pair of return rollers 72 and supplied to the secondary transfer portion T2 through the pair of gate rollers 10g which decide the timing of paper supply to the secondary transfer portion T2.

Incidentally, the path length of the transport path 16 from the pair of gate rollers 10g to the pair of switchback rollers 93 is 208 mm whereas the path length of the return path 17 from the pair of switchback rollers 93 to the pair of gate rollers 10g is 352 mm.

The path length of the return path 17 is at least a length obtained by adding a length necessary for making the sheet flexible to a maximum paper length allowing this apparatus to form an image.

The respective embodiments of the present invention will be described below successively. Common items will be described first.

Incidentally, the image forming sequence for the rear face of the sheet is reverse to the image forming sequence for the front face of the sheet because the image forming apparatus of the present invention is an apparatus of the type for ejecting the sheet facedown. That is, for example, for formation of a first page image on the front face of a sheet and formation of a second page image on the rear face of the sheet, the image forming apparatus first forms the second page image on the rear face of the sheet, switches back the sheet, forms the first page image on the front face of the sheet and ejects the sheet toward the paper ejection tray 15.

Accordingly, the other face of the sheet in the case means the front face of the sheet.

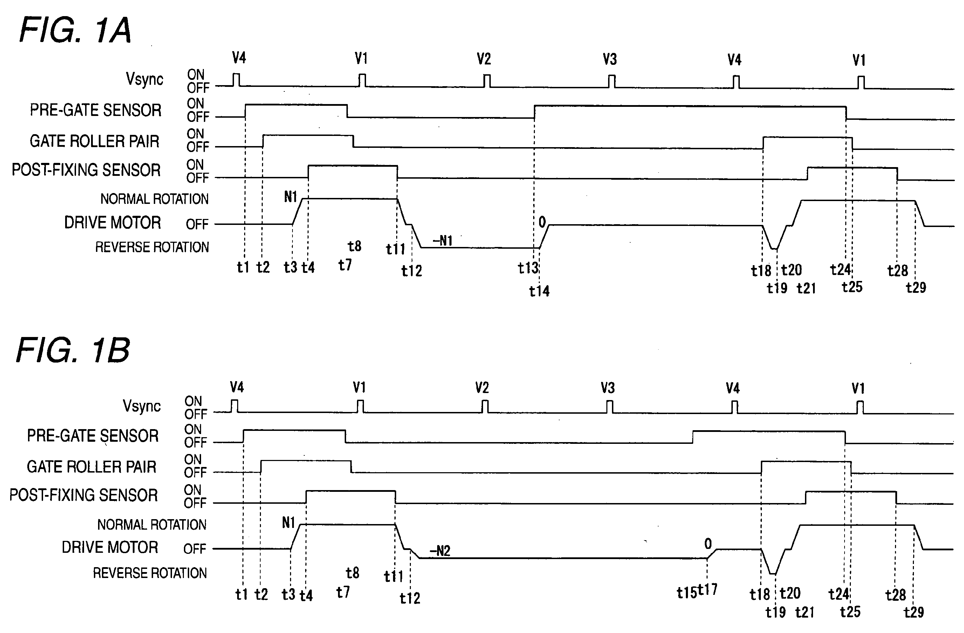

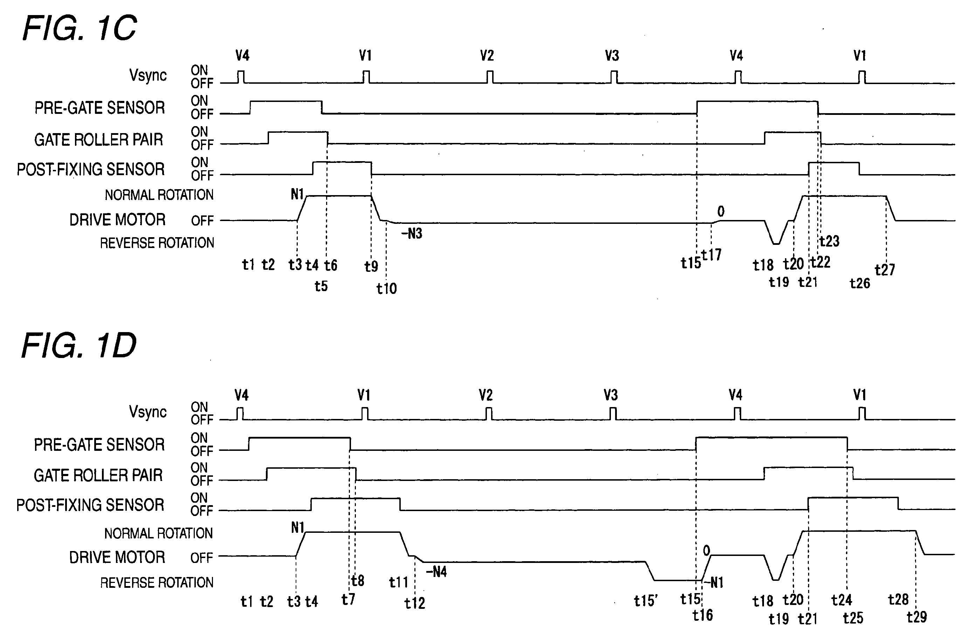

In Figs. 1A to 4B, "Vsync" designates a vertical synchronizing signal which is a periodic signal obtained when a detectable portion (a mark such as a protrusion piece, a hole, etc.) provided in the intermediate transfer belt 51 (see Fig. 5) rotating at the time of image forming is detected by a sensor 50s (see Fig. 5). In this embodiment, the time period is about 2 sec.

An image forming operation is performed on the basis of the "Vsync". For example, an operation of forming a first color image part is started on the basis of a signal V1, an operation of forming a second color image part is started on the basis of a signal V2, an operation of forming a third color image part is started on the basis of a signal V3, and an operation of forming a fourth color image part is started on the basis of a signal V4.

A "pre-gate sensor" signal is an on/off signal obtained by rotation of a pre-gate sensor lever 10s (see Fig. 5) provided in front of the pair of gate rollers 10g. When the leading end of the sheet moving toward the pair of gate rollers 10g turns the pre-gate sensor lever 10s, this signal is turned on. When the trailing end of the sheet has passed through the pre-gate sensor lever 10s, this signal is turned off.

A "gate roller pair" signal is a signal for driving the pair of gate rollers 10g. When this signal is turned on, the pair of gate rollers 10g rotate to transport the sheet toward the secondary transfer portion T2. When this signal is turned off, the pair of gate rollers 10g stop.

A "post-fixing sensor" signal is an on/off signal obtained by rotation of a post-fixing sensor lever 60s (see Fig. 5) provided in the rear of the fixing unit 60. When the leading end of the sheet passing through the fixing unit 60 turns the post-fixing sensor lever 60s, this signal is turned on. When the trailing end of the sheet has passed through the post-fixing sensor lever 60s, this signal is turned off.

A "drive motor" signal shows a rotation state of the drive motor 71 provided for returning the sheet.

An image is formed on the basis of "Vsync" as described above. For example, the paper feed roller 19 (or 82) operates at predetermined timing on the basis of a signal (V3 not shown) previous to a signal V4, so that the sheet is fed toward the pair of gate rollers 10g. The speed of paper feeding corresponds to the rotational speed N1 of the motor 71 (which will be described later).

At a point of time t1 when the leading end of the sheet turns the pre-gate sensor lever 10s, the "pre-gate sensor" signal is turned on but the pair of gate rollers 10g still stop.

Accordingly, the leading end of the sheet abuts on the nip portion between the pair of gate rollers 10g, so that oblique motion (skew) of the sheet is corrected by the abutment.

### [First Embodiment]

When the image formed for the other face of the sheet by the image forming portion is a color image, the image forming apparatus of the first embodiment is characterized in that the sheet is returned at a return speed lower than the transport speed in the secondary transfer portion T2 (hereinafter referred to as "ordinary transport speed").

Fig. 1B and Figs. 1C and 1D are timing charts for explaining paper return control in the image forming apparatus of the first embodiment. Fig. 1A is a timing chart in a comparative example (in the case where the sheet is returned at an ordinary speed).

Fig. 1B is a timing chart in the basic case (where the sheet is an A4-size sheet). Fig. 1C is a timing chart in the case where the sheet is shorter than A4 size (e.g. in the case where an A5 size sheet is fed longitudinally). Fig. 1D is a timing chart for explaining more desirable control.

In Figs. 1A to 1D, at a point of time t2 when a predetermined time has passed after the point of time t1, more exactly, when a predetermined time has passed after the signal V4, the pair of gate rollers 10g are rotated to transport the sheet toward the secondary transfer portion T2. At a point of time t3, the motor 71 is rotated normally at a rotational speed N1 to rotate the pair of paper ejection rollers 91 and 92 and the pair of switchback rollers 93 normally to prepare for transport of the sheet.

In a process of.transporting the sheet, an image is transferred onto the sheet in the secondary transfer portion T2. In a process in which the sheet passes through the fixing unit 60, the leading end of the sheet turns the post-fixing sensor lever 60s. In this manner, the "post-fixing sensor" signal is turned on at a point of time t4. Control after the point of time t4 will be described in accordance with the cases because the control varies in accordance with the cases.

The case (comparative example) where the sheet is returned at an ordinary speed will be described first to make description easily understandable.

As shown in Fig. 1A, the pair of gate rollers 10g are stopped at a point of time t8 (when the trailing end of the sheet has passed through the pair of gate rollers 10g when a predetermined time has passed after a point of time t7 (t5 and t6 not shown will be described later) when the trailing end of the sheet has passed through the pre-gate sensor lever 10s after the "post-fixing sensor" signal is turned on at the point of time t4.

At a point of time t11 when the trailing end of the sheet has passed through the post-fixing sensor lever 60s, the motor 71 is paused. At a point of time t12, the motor 71 is rotated reversely at a rotational speed N1 (ordinary speed) (-N1) to rotate the pair of paper ejection rollers 91 and 92, the pair of switchback rollers 93 and the pair of return rollers 72 reversely to switch back the sheet to return the sheet to the return path 17 at the ordinary speed.

At a point of time t13 when the leading end (in the direction of movement) of the sheet returned thus turns the pre-gate sensor lever 10s, the "pre-gate sensor" signal is turned on but the motor 71 is kept rotated reversely at the rotational speed N1 for a predetermined time after the point of time t13. After the leading end of the sheet is made to abut on the nip portion between the pair of gate-rollers 10g stopped at this point of time so that oblique motion of the sheet is corrected by abutment, the motor 71 is stopped at a point of time t14.

Accordingly, the sheet is stopped at this point of time and kept in a standby state before four color image parts are superposed on the intermediate transfer belt 51 so as to be able to be transferred.

Then, at predetermined timing t18 based on the signal V4, the pair of gate rollers 10g are rotated and the motor 71 is once reversed to rotate the pair of return rollers 72 to supply the sheet toward the secondary transfer portion T2 again.

Then, at a point of time t19 when the trailing end of the sheet has passed through the pair of return rollers 72, the motor 71 is paused. At a point of time t20 before the leading end of the sheet reaches the pair of switchback rollers 93, the motor 71 is rotated normally at a rotational speed N1 to prepare for ejection of the sheet.

Then, at a point of time t21, the leading end of the sheet turns on the post-fixing sensor lever 60s. At a point of time t24 when the trailing end of the sheet has passed through the pre-gate sensor lever 10s, the pre-gate sensor lever 10s is turned off. Accordingly, the pair of gate rollers 10g are stopped at a point of time t25. The motor 71 is stopped at a point of time t29 when a predetermined time has passed after a point of time t28 when the trailing end of the sheet has passed through the post-fixing sensor lever 60s. In this manner, the paper ejection operation is completed.

As is obvious from the above description, when the sheet is returned at an ordinary speed (rotational speed N1 of the motor 71), the standby time period of the sheet (i.e. the stop time period of the sheet from t14 to t18) in the return path 17 until superposition of multiple color image parts on the intermediate transfer member 51 with rotations of the intermediate transfer member 51 becomes long.

For this reason, the time period of local contact between the sheet having passed through the fixing unit 60 and heated at a high temperature and the constituent members (such as a guide member, a pair of return rollers for transporting the sheet, etc.) of the return path 17, especially the time period of contact between the sheet and the pair of return rollers 72 for nipping and returning the sheet, becomes so long that heat of the sheet in the contact portion is greatly radiated to reduce the temperature of the contact portion compared with heat of the sheet in the other portion. As a result, gloss irregularity occurs in the image transferred and fixed on the sheet, so that image quality is lowered.

In this embodiment, therefore, the return of the sheet is controlled as shown in Fig. 1B. Further preferably, the return of the sheet is controlled as shown in Fig. 1D.

The control shown in Fig. 1B is characterized in that when the motor 71 is to be rotated reversely at a point of time t12, the motor 71 is rotated reversely at a rotational speed N2 (i.e. -N2) lower than the ordinary rotational speed N1 to rotate the pair of paper ejection rollers 91 and 92, the pair of switchback rollers 93 and the pair of return rollers 72 reversely at a low speed to thereby return the sheet to the return path 17. Incidentally, the control shown in Fig.1B, as to the other points, is the same as the control shown in Fig. 1A.

When the sheet is returned at a low speed, the point of time t15 for the leading end of the returned sheet to turn the pre-gate sensor lever 10s is retarded, so that the point of time t17 to stop the motor 17 is retarded.

For this reason, the stop time period of the sheet is substantially from t17 to t18, so that the stop time period of the sheet is remarkably shorter than the stop time period t14 to t18 in the ordinary control mode.

Accordingly, the time period of local contact between the sheet having passed through the fixing unit 60 and heated at a high temperature and the constituent members (such as a guide member, a pair of return rollers for transporting the sheet, etc.) of the return path 17, especially the time period of contact between the sheet and the pair of return rollers 72 for nipping and returning the sheet, becomes so short that heat radiated from the sheet in the contact portion is reduced. As a result, gloss irregularity hardly occurs in the image transferred and fixed on the sheet.

The return speed, that is, the rotational speed (reverse rotational speed) of the motor 71 at the time of returning the sheet, is decided on the basis of the timing of switchback and the return distance (i.e. the length of the path from the pair of switchback rollers 93 to the pair of gate rollers 10g).

According to this configuration, the sheet can be returned in an optimum condition regardless of the size of the sheet.

For example, in the case of longitudinal feeding of A5-size paper shorter than A4 size paper, as shown in Fig. 1C, the timing t9 for the trailing end of the sheet to depart from the post-fixing sensor lever 60s becomes earlier than the timing t11 because the sheet is shorter. Accordingly, the timing t10 to rotate the motor 71 reversely becomes earlier than the timing t12.

For this reason, if the motor 71 is rotated reversely at the rotational speed N2, the sheet is returned so quickly that the standby time period of the sheet becomes too long.

Therefore, the return speed, that is, the rotational speed (reverse rotational speed) of the motor 71 at the time of returning the sheet, is decided on the basis of the timing of switchback and the return distance.

For example, in the case of A4-size paper, as shown in Fig. 1 B, the rotational speed (reverse rotational speed) of the motor 71 at the time of returning the sheet is set at N2. For example, in the case of A5-size paper, as shown in Fig. 1C, the rotational speed (reverse rotational speed) of the motor 71 at the time of returning the sheet is set at N3 which is a rotational speed lower than N2 (N3 < N2).

Specifically, because the return distance is fixed in this apparatus, a table for indicating the timing (t11, t9 in the aforementioned example) of turning off the post-fixing sensor lever 60s in accordance with any paper size and the reverse rotational speed (N2, N3 in the aforementioned example) corresponding to the timing is provided in the control portion for controlling this apparatus in advance so that the reverse rotational speed can be decided in accordance with the timing of turning off the post-fixing sensor lever 60s.

According to this configuration, the sheet can be returned at a return speed to obtain an optimum condition, that is, to minimize the standby time period regardless of the size of the sheet.

Fig. 1D is a timing chart showing further preferred control.

This control is characterized in that when the sheet is to be returned, the sheet is first returned at a return speed (rotational speed N4) lower than the transport speed (motor rotational speed N1) at the time of transferring and then returned at a return speed (rotational speed N1) equal to the feed speed of the sheet toward the pair of gate rollers 10g (e.g. the speed of feeding the sheet toward the pair of gate rollers 10g by the pair of feed rollers 19 or the like so that the image can be transferred onto the rear face of the sheet when the other face of the sheet is a front face). This control as to the other points is the same as the control shown in Fig. 1B.

Specifically, when the sheet is to be returned, the motor 71 is first rotated reversely at a rotational speed N4 at a point of time t12 to return the sheet. The rotational speed N4 is lower than the transport speed (motor rotational speed N1) at the time of transferring an image onto the sheet and is lower than the rotational speed N2.

Then, at a point of time t15' when a predetermined time has passed after the point of time t12, the reverse rotational speed of the motor 71 is increased to N1 equal to the speed of feeding the sheet toward the pair of gate rollers 10g to thereby return the sheet toward the pre-gate sensor lever 10s and the pair of gate rollers 10g.

Also in this configuration, because the sheet is first returned at a low speed (N4), the standby time period of the sheet (the stop time period of the sheet) in the return path 17 to feed the sheet to the transfer portion T2 is substantially from t16 to t18, so that the stop time period can be remarkably reduced compared with the stop time period t14 to t18 (Fig.1A) at the time of ordinary control. Accordingly, the aforementioned operation and effect can be obtained.

When the leading end of the sheet returned according to this configuration abuts on the pair of gate rollers 10g, the return speed of the sheet becomes equal to the speed (corresponding to the rotational speed N1) of feeding the sheet toward the pair of gate rollers 10g by the feed roller 19 (or 82). Accordingly, the speed of the sheet abutting on the pre-gate sensor lever 10s and the pair of gate rollers 10g in the case where an image is transferred onto the rear face of the sheet becomes equal to the speed of the sheet abutting on the pre-gate sensor lever 10s and the pair of gate rollers 10g in the case where an image is transferred onto the front face of the sheet. For this reason, the leading end of the sheet can be set to a predetermined position (the sheet can be prevented from moving obliquely, that is, a skew removal) in the same condition.

Incidentally, the aforementioned process control is performed by a control portion not shown but provided in the body of the image forming apparatus.

The aforementioned image forming apparatus includes: an image forming portion for forming a monochrome image part on an intermediate transfer member 51 with every rotation of the intermediate transfer member 51 or superposing four-color image parts on the intermediate transfer member 51 with four rotations of the intermediate transfer member 51 to thereby form a color image on the intermediate transfer member 51; a transfer portion T2 by which the image formed on the intermediate transfer member 51 by the image forming portion is transferred onto a sheet; and a fixing portion 60 through which the sheet with the image transferred by the transfer portion T2 passes to fix the image on the sheet, wherein: the sheet having passed thorough the fixing portion 60 is switched back to a return path 17 and returned to the transfer portion T2 so that an image can be also transferred onto the other face of the sheet; and when the image formed for the other face of the sheet by the image forming portion is a color image, the sheet is returned at a return speed lower than the speed of transport at the time of transferring.

According to this configuration, the standby time period of the sheet (the stop time period of the sheet) in the return path 17 to feed the sheet to the transfer portion T2 can be shortened.

Accordingly, the time period of local contact between the sheet having passed through the fixing portion 60 and heated at a high temperature and the constituent members (such as a guide member, a pair of return rollers for transporting the sheet, etc.) of the return path 17, especially, the time period of contact between the sheet and the pair of return rollers 72 for nipping and returning the sheet can be shortened to reduce the quantity of radiated heat in the contact portion to thereby reduce the local temperature difference on the sheet.

As a result, in accordance with the image forming apparatus, gloss irregularity at the time of color image forming can be reduced to improve image quality.

Because the return speed is decided on the basis of the timing of switchback and the return distance, the sheet can be returned in an optimum condition regardless of the size of the sheet.

The image forming apparatus further includes a pair of gate rollers 10g provided in front of the transfer portion T2 and brought into contact with a leading end of the sheet to thereby set the leading end of the sheet to a predetermined position (prevent the sheet from moving obliquely, that is, a skew removal) and decide the timing of paper supply to the transfer portion T2. Accordingly, when the image formed for the other face of the sheet by the image forming portion is a color image, the sheet is first returned at a return speed lower than the transport speed at the time of transferring and then returned at a return speed equal to the speed of feeding the sheet toward the pair of gate rollers 10g. In this case, the following operation and effect can be obtained.

That is, because the sheet is first returned at a low speed, the standby time period of the sheet (the stop time period of the sheet) in the return path 17 to feed the sheet to the transfer portion T2 can be shortened so that the aforementioned operation and effect can be obtained.

When the leading end of the sheet returned according to this configuration abuts on the pair of gate rollers 10g, the return speed of the sheet becomes equal to the speed of feeding the sheet toward the pair of gate rollers 10g. Accordingly, the speed of the sheet abutting on the pair of gate rollers 10g in the case where an image is transferred onto the rear face of the sheet becomes equal to the speed of the sheet abutting on the pair of gate rollers 10g in the case where an image is transferred onto the front face of the sheet. For this reason, the leading end of the sheet can be set to a predetermined position (the sheet can be prevented from moving obliquely, that is, a skew remobval) in the same condition.

### [Second Embodiment]

When the image formed for the other face of the sheet by the image forming portion is a color image, the image forming apparatus of the second embodiment is characterized in that the sheet is stopped a plurality of times while the sheet is returned to the transfer portion T2.

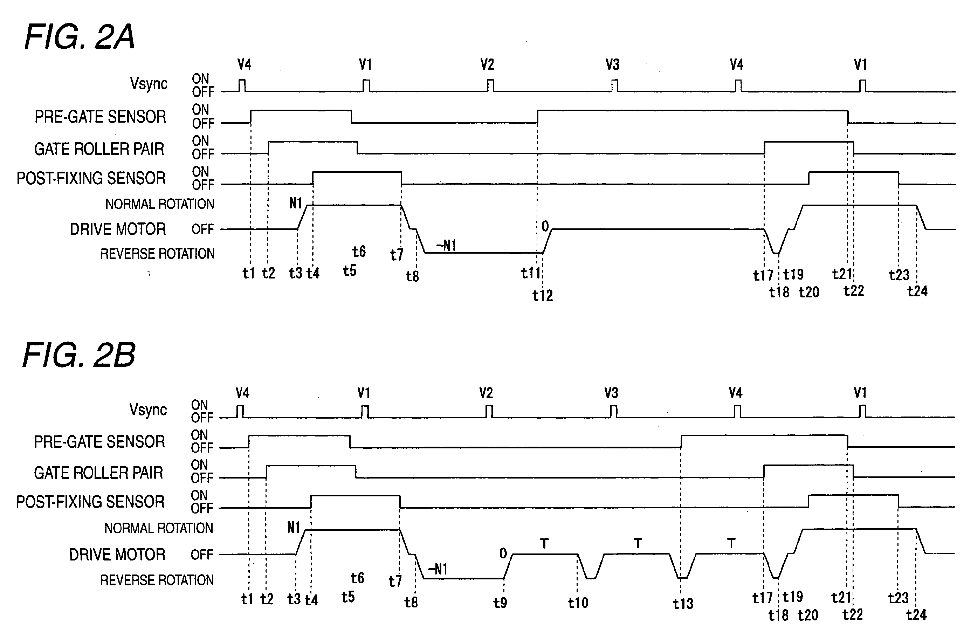

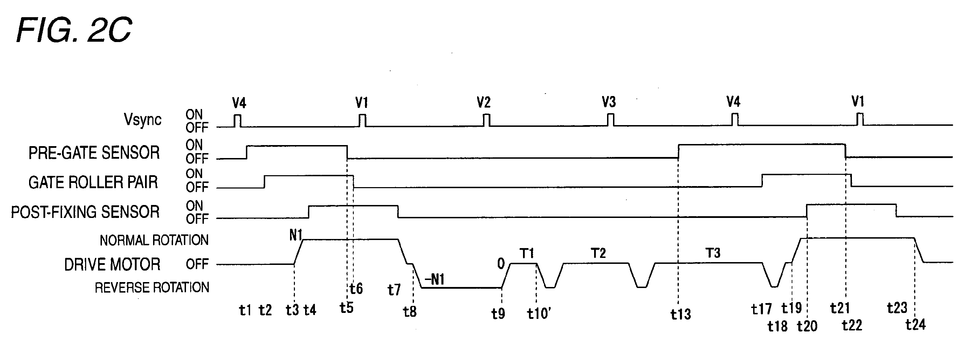

Fig. 2B and Fig. 2C are timing charts for explaining paper return control in the image forming apparatus of the second embodiment. Fig. 2A is a timing chart in a comparative example (in the case where the sheet is returned without stopped a plurality of times).

Fig. 2B is a timing chart in the basic case. Fig. 2C is a timing chart in preferable control.

In Figs. 2A to 2C, at a point of time t2 when a predetermined time has passed after the point of time t1, more exactly, when a predetermined time has passed after the signal V4, the pair of gate rollers 10g are rotated to transport the sheet toward the secondary transfer portion T2. At a point of time t3, the motor 71 is rotated normally at a rotational speed N1 to rotate the pair of paper ejection rollers 91 and 92 and the pair of switchback rollers 93 normally to prepare for transport of the sheet.

In a process of transporting the sheet, an image is transferred onto the sheet in the secondary transfer portion T2. In a process in which the sheet passes through the fixing unit 60, the leading end of the sheet turns the post-fixing sensor lever 60s. In this manner, the "post-fixing sensor" signal is turned on at a point of time t4.

After the point of time t4 when the "post-fixing sensor" signal is turned on, the pair of gate rollers 10g are stopped at a point of time t6 when a predetermined time has passed (the trailing end of the sheet has passed through the pair of gate rollers 10g) after a point of time t5 when the trailing end of the sheet has passed though the pre-gate sensor lever 10s.

At a point of time t7 when the trailing end of the sheet has passed through the post-fixing sensor lever 60s, the motor 71 is paused. At a point of time t8, the motor 71 is rotated reversely at an (ordinary) rotational speed N1 (-N1) to rotate the pair of paper ejection rollers 91 and 92, the pair of switchback rollers 93 and the pair of return rollers 72 reversely to switch back the sheet to start returning of the sheet to the return path 17 at an ordinary speed.

Although the aforementioned operation is common with the respective cases, control after the point of time t8 varies according to each case. Accordingly, control after the point of time t8 in each case will be described below.

To simplify the description, the case (comparative example) where the sheet is returned without being stopped a plurality of times will be described first.

As shown in Fig. 2A, at a point of time t11 (t9 and t10 are not shown but will be described later) when the leading end (in the direction of movement) of the returned sheet turns the pre-gate sensor lever 10s after the sheet begins to be returned toward the return path 17 at an ordinary speed at the point of time t8, the "pre-gate sensor" signal is turned on but the motor 71 is kept rotated reversely at the rotational speed N1 for a predetermined time after the point of time t11. After the leading end of the sheet is made to abut on the nip portion between the pair of gate rollers 10g stopped at this point of time so that oblique motion of the sheet is corrected by the abutment, the motor 71 is stopped at a point of time t12.

Accordingly, the sheet is stopped at this point of time and kept in a standby state before four color image parts are superposed on the intermediate transfer belt 51 so as to be able to be transferred.

Then, at predetermined timing t17 based on the signal V4, the pair of gate rollers 10g are rotated and the motor 71 is once reversed to rotate the pair of return rollers 72 to supply the sheet toward the secondary transfer portion T2 again.

Then, at a point of time t18 when the trailing end of the sheet has passed through the pair of return rollers 72, the motor 71 is paused. At a point of time t19 before the leading end of the sheet reaches the pair of switchback rollers 93, the motor 71 is rotated normally at a rotational speed N1 to prepare for ejection of the sheet.

Then, at a point of time t20, the leading end of the sheet turns on the post-fixing sensor lever 60s. At a point of time t21 when the trailing end of the sheet has passed through the pre-gate sensor lever 10s, the pre-gate sensor lever 10s is turned off. Accordingly, the pair of gate rollers 10g are stopped at a point of time t22. The motor 71 is stopped at a point of time t24 when a predetermined time has passed after a point of time t23 when the trailing end of the sheet has passed through the post-fixing sensor lever 60s. In this manner, the paper ejection operation is completed.

As is obvious from the above description, when the sheet is returned without stopped a plurality of times, the standby time period of the sheet (i.e. the stop time period of the sheet from t12 to t17) at one place in the return path 17 until superposition of multiple color image parts on the intermediate transfer member 51 with rotations of the intermediate transfer member 51 becomes long.

For this reason, the time period of local contact between the sheet having passed through the fixing portion 60 and heated at a high temperature and the constituent members (such as a guide member, a pair of return rollers for transporting the sheet, etc.) of the return path 17, especially the time period of contact between the sheet and the pair of return rollers 72 for nipping and returning the sheet, becomes so long that heat of the sheet in the contact portion is greatly radiated to reduce the temperature of the contact portion compared with heat of the sheet in the other portion. As a result, gloss irregularity occurs in the image transferred and fixed on the sheet, so that image quality is lowered.

In this embodiment, therefore, the return of the sheet is controlled as shown in Fig. 2B. Further preferably, the return of the sheet is controlled as shown in Fig. 2C.

The control shown in Fig. 2B is characterized as follows. After the motor 71 is rotated reversely at a point of time t8 to start the return of the sheet, the motor 71 is stopped to stop the return of the sheet at a point of time t9 when the trailing end (in the direction of movement) of the sheet on the paper ejection tray 15 can be prevented from being grasped (accessed) by the user. At a point of time t10 when a stop time period T has passed after the point of time t9, the motor 71 is rotated reversely again to restart the return of the sheet. This operation is intermittently repeated so that the sheet is stopped a plurality of times (twice in this case, three times if the stop of the sheet at the pair of gate rollers 10g is included) while the sheet is returned to the transfer portion T2. Incidentally, the control shown in Fig. 2B as to the other points is the same as the control shown in Fig. 2A.

When the sheet is stopped a plurality of times in this manner while the sheet is returned, the time period of local contact between the sheet having passed through the fixing portion 60 and heated at a high temperature and the constituent members (such as a guide member, a pair of return rollers for transporting the sheet, etc.) of the return path 17 can be dispersed, especially the time period of contact between a predetermined portion of the sheet and the pair of return rollers 72 for nipping and returning the sheet can be shortened.

Accordingly, the quantity of radiated heat in the contact portion between the stopped sheet and the pair of return rollers 72 can be reduced, so that the local temperature difference on the sheet can be reduced. As a result, gloss irregularity hardly occurs in the image transferred and fixed on the sheet.

When the leading end of the sheet returned according to this configuration abuts on the pair of gate rollers 10g, the return speed of the sheet becomes equal to the speed (corresponding to the rotational speed N1) of feeding the sheet toward the pair of gate rollers 10g by the feed roller 19 (or 82). Accordingly, the speed of the sheet abutting on the pre-gate sensor lever 10s and the pair of gate rollers 10g in the case where an image is transferred onto the rear face of the sheet becomes equal to the speed of the sheet abutting on the pre-gate sensor lever 10s and the pair of gate rollers 10g in the case where an image is transferred onto the front face of the sheet. For this reason, the leading end of the sheet can be set to a predetermined position (the sheet can be prevented from moving obliquely, that is, a skew removal) in the same condition.

Fig. 2C is a timing chart showing further preferred control.

This control is characterized in that the stop time period of the sheet is elongated gradually when the sheet is stopped a plurality of timed while the sheet is returned. In the control shown in Fig. 2C, T1 is the first stop time period (see timing t10' for rotating the sheet reversely again), T2 is the second stop time period longer than T1, and T3 is the third stop time period longer than T2. The control shown in Fig. 2C as to the other points is the same as the control shown in Fig. 2B.

The temperature of the sheet is the highest just after the sheet has passed through the fixing portion 60. Then, the temperature of the sheet is reduced gradually.

Accordingly, if the first one of the stop time periods is increased (e.g. to T3), the time period of local contact between the sheet having passed through the fixing portion 60 and heated at a high temperature and the constituent members (such as a guide member, a pair of return rollers for transporting the sheet, etc.) of the return path 17 becomes long. As a result, there is a possibility that the aforementioned problem cannot be solved well.

On the contrary, when the first stop time period is shortened and then the stop time period is elongated gradually as shown in Fig. 2C, the time period of contact between the sheet at a high temperature and the constituent members of the return path 17 can be shortened. As a result, the quality of radiated heat in the contact portion between the stopped sheet and the pair of return rollers 72 can be reduced surely, so that the local temperature difference on the sheet can be reduced surely.

Incidentally, the aforementioned process control is performed by a control portion not shown but provided in the image forming apparatus.

The image forming apparatus as described above includes: an image forming portion for forming a monochrome image part on an intermediate transfer member 51 with every rotation of the intermediate transfer member 51 or superposing four-color image parts on the intermediate transfer member 51 with four rotations of the intermediate transfer member 51 to thereby form a color image on the intermediate transfer member 51; a transfer portion T2 by which the image formed on the intermediate transfer member 51 by the image forming portion is transferred onto a sheet; and a fixing portion 60 through which the sheet with the image transferred by the transfer portion T2 passes to fix the image on the sheet, wherein: the sheet having passed thorough the fixing portion 60 is switched back to a return path 17 and returned to the transfer portion T2 so that an image can be also transferred onto the other face of the sheet; and when the image formed for the other face of the sheet by the image forming portion is a color image, the sheet is stopped a plurality of times while the sheet is returned to the transfer portion T2. Accordingly, it is possible to shorten the time period of local contact between the sheet having passed through the fixing portion 60 and heated at a high temperature and the constituent members (such as a guide member, a pair of return rollers for transporting the sheet, etc.) of the return path 17, especially the time period of contact between a predetermined portion of the sheet and the pair of return rollers 72 for nipping and returning the sheet.

Accordingly, the quantity of radiated heat in the contact portion between the sheet and the pair of return rollers 72 is reduced while the sheet is stopped, so that the local temperature difference on the sheet can be reduced.

As a result, gloss irregularity at the time of color image forming can be reduced to improve image quality.

In the image forming apparatus configured so that the sheet is switched back to the return path 17 and returned to the transfer portion T2 after the sheet having passed through the fixing portion 60 is transported toward a paper ejection tray 15, there is a possibility that a user will grasp and take out a trailing end of the sheet because of the stop of the sheet (e.g. because the user mistakes the stop of the sheet for termination of a paper ejection operation) if the first or earlier one of the stops is performed in a state in which the user can grasp (access) the trailing end of the sheet on the paper ejection tray.

On the contrary, in accordance with this embodiment, the sheet is first continuously transported (see t8 to t9 in Figs. 2B and 2C) such an extent that the user cannot grasp (access) the trailing end of the sheet on the paper ejection tray 15, and then the sheet is stopped a plurality of times while the sheet is returned to the transfer portion T2. Accordingly, the aforementioned disadvantage is eliminated because the stop is started after the user cannot grasp (access) the trailing end of the sheet on the paper ejection tray.

The stop time period in which the sheet is stopped a plurality of times is elongated gradually. That is, the first stop time period is shortened and then the stop time period is elongated gradually. Accordingly, the time period of contact between the sheet at a high temperature and the constituent members of the return path 17 can be shortened. As a result, the quality of radiated heat in the contact portion between the stopped sheet and the pair of return rollers 72 can be reduced surely, so that the local temperature difference on the sheet can be reduced surely.

### [Third Embodiment]

When the image formed for the other face of the sheet by the image forming portion is a color image, the image forming apparatus of the third embodiment is characterized in that the sheet is returned at a return speed equal to the speed of transport at the time of secondary transferring (hereinafter referred to as "ordinary transport speed") and then returned at a return speed lower than the transport speed at the time of secondary transferring (ordinary transport speed) after the user cannot grasp (access) the trailing end of the sheet on the paper ejection tray.

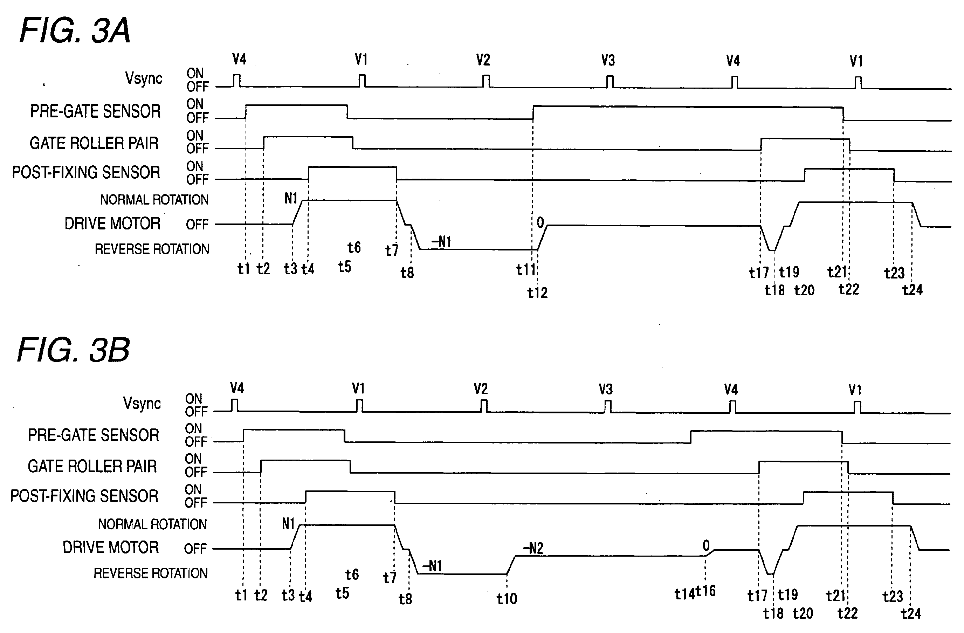

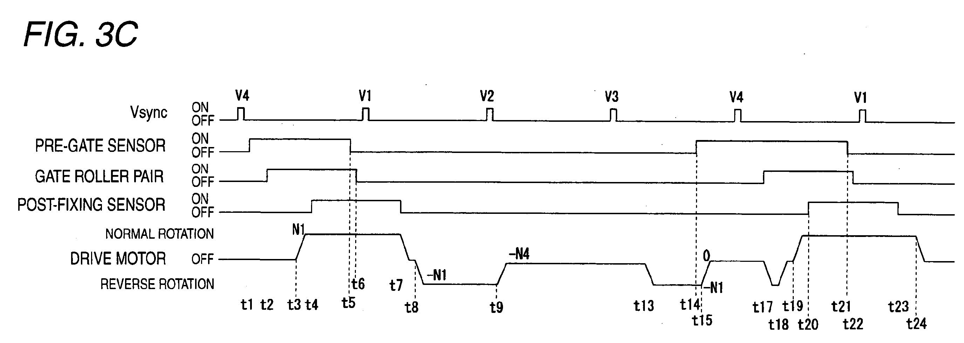

Fig. 3B and 3C are timing charts for explaining paper return control in the image forming apparatus of the third embodiment. Fig. 3A is a timing chart in a comparative example (in the case where the sheet is returned at an ordinary speed).

Fig. 3B is a timing chart in the basic case. Fig. 3C is a timing chart for explaining more desirable control.

In Figs. 3A to 3C, at a point of time t2 when a predetermined time has passed after the point of time t1, more exactly, when a predetermined time has passed after the signal V4, the pair of gate rollers 10g are rotated to transport the sheet toward the secondary transfer portion T2. At a point of time t3, the motor 71 is rotated normally at a rotational speed N1 to rotate the pair of paper ejection rollers 91 and 92 and the pair of switchback rollers 93 normally to prepare for transport of the sheet.

In a process of transporting the sheet, an image is transferred onto the sheet in the secondary transfer portion T2. In a process in which the sheet passes through the fixing unit 60, the leading end of the sheet turns the post-fixing sensor lever 60s. In this manner, the "post-fixing sensor" signal is turned on at a point of time t4.

The pair of gate rollers 10g are stopped at a point of time t6 (when the trailing end of the sheet has passed through the pair of gate rollers 10g) when a predetermined time has passed after a point of time t5 when the trailing end of the sheet has passed through the pre-gate sensor lever 10s after the "post-fixing sensor" signal is turned on at the point of time t4.

At a point of time t7 when the trailing end of the sheet has passed through the post-fixing sensor lever 60s, the motor 71 is paused. At a point of time t8, the motor 71 is rotated reversely at a rotational speed N1 (ordinary speed) (-N1) to rotate the pair of paper ejection rollers 91 and 92, the pair of switchback rollers 93 and the pair of return rollers 72 reversely to switch back the sheet to start returning of the sheet to the return path 17 at an ordinary speed.

The aforementioned procedure is common with the respective cases. Control after the point of time t8 will be described in accordance with the cases because the control varies in accordance with the cases.

The case (comparative example) where the sheet is returned at an ordinary speed will be described first to make description easily understandable.

As shown in Fig. 3A, the "pre-gate sensor" signal is turned on at a point of time t11 (t9 and t10 not shown but will be described later) when the leading end (in the direction of movement) of the returned sheet turns the pre-gate sensor lever 10s after the sheet begins to return to the return path 17 at the ordinary speed at the point of time t8. The motor 71 is kept rotated reversely at the rotational speed N1 for a predetermined time after the point of time t11. After the leading end of the sheet is made to abut on the nip portion between the pair of gate rollers 10g stopped at this point of time so that oblique motion of the sheet is corrected, the motor 71 is stopped at a point of time t12.

Accordingly, the sheet is stopped at this point of time and kept in a standby state before four color image parts are superposed on the intermediate transfer belt 51 so as to be able to be transferred.

Then, at predetermined timing t17 based on the signal V4, the pair of gate rollers 10g are rotated and the motor 71 is once reversed to rotate the pair of return rollers 72 to supply the sheet toward the secondary transfer portion T2 again.

Then, at a point of time t18 when the trailing end of the sheet has passed through the pair of return rollers 72, the motor 71 is paused. At a point of time t19 before the leading end of the sheet reaches the pair of switchback rollers 93, the motor 71 is rotated normally at a rotational speed N1 to prepare for ejection of the sheet.

Then, at a point of time t20, the leading end of the sheet turns on the post-fixing sensor lever 60a. At a point of time t21 when the trailing end of the sheet has passed through the pre-gate sensor lever 10s, the pre-gate sensor lever 10s is turned off. Accordingly, the pair of gate rollers 10g are stopped at a point of time t22. The motor 71 is stopped at a point of time t24 when a predetermined time has passed after a point of time t23 when the trailing end of the sheet has passed through the post-fixing sensor lever 60s. In this manner, the paper ejection operation is completed.

As is obvious from the above description, when the sheet is returned at an ordinary speed (rotational speed N1 of the motor 71), the standby time period of the sheet (i.e. the stop time period of the sheet from t12 to t17) in the return path 17 until superposition of multiple color image parts on the intermediate transfer member 51 with rotations of the intermediate transfer member 51 becomes long.

For this reason, the time period of local contact between the sheet having passed through the fixing portion 60 and heated at a high temperature and the constituent members (such as a guide member, a pair of return rollers for transporting the sheet, etc.) of the return path 17, especially the time period of contact between the sheet and the pair of return rollers 72 for nipping and returning the sheet, becomes so long that heat of the sheet in the contact portion is greatly radiated to reduce the temperature of the contact portion compared with heat of the sheet in the other portion. As a result, gloss irregularity occurs in the image transferred and fixed on the sheet, so that image quality is lowered.

In this embodiment, therefore, the return of the sheet is controlled as shown in Fig. 3B. Further preferably, the return of the sheet is controlled as shown in Fig. 3C.

The control shown in Fig. 3B is characterized in that when the motor 71 is to be rotated reversely at a point of time t8, the motor 71 is rotated at a rotational speed equal to the rotational speed N1 of transport (the aforementioned ordinary speed) at the time of transferring and then rotated reversely at a rotational speed N2 (i.e. -N2) lower than the ordinary rotational speed N1 to rotate the pair of paper ejection rollers 91 and 92, the pair of switchback rollers 93 and the pair of return rollers 72 reversely at a low speed at a point of time t10 when the user cannot grasp (access) the trailing end (in the direction of movement) of the sheet on the paper ejection tray 15. In this manner, the sheet is returned to the return path 17 at a low speed. Incidentally, the control shown in Fig. 3B, as to the other points, is the same as the control shown in Fig. 3A.

When the sheet is returned at a low speed, the point of time t14 for the leading end of the returned sheet to turn the pre-gate sensor lever 10s is retarded, so that the point of time t16 to stop the motor 17 is retarded.

For this reason, the stop time period of the sheet is substantially from t16 to t17, so that the stop time period of the sheet is remarkably shorter than the stop time period t12 to t17 in the ordinary control mode.

Accordingly, the time period of local contact between the sheet having passed through the fixing unit 60 and heated at a high temperature and the constituent members (such as a guide member, a pair of return rollers for transporting the sheet, etc.) of the return path 17, especially the time period of contact between the sheet and the pair of return rollers 72 for nipping and returning the sheet, becomes so short that the quantity of heat radiated from the sheet in the contact portion is reduced. As a result, gloss irregularity hardly occurs in the image transferred and fixed on the sheet.

The return speed, that is, the rotational speed (reverse rotational speed) of the motor 71 at the time of returning the sheet, and the time period for rotating the motor 71 are decided on the basis of the timing of switchback and the return distance (i.e. the length of the path from the pair of switchback rollers 93 to the pair of gate rollers 10g).

According to this configuration, the sheet can be returned in an optimum condition regardless of the size of the sheet.

For example, in the case of longitudinal feeding of A5-size paper shorter than A4-size paper, the timing for the trailing end of the sheet to depart from the post-fixing sensor lever 60s becomes earlier than the timing t7 because the sheet is shorter. Accordingly, the timing to rotate the motor 71 reversely becomes earlier than the timing t8.

For this reason, if the motor 71 is rotated reversely at the rotational speeds N1 and N2 as described above, the sheet is returned so quickly that the standby time period of the sheet becomes too long.

Therefore, the return speed, that is, the low rotational speed (reverse rotational speed) of the motor 71 at the time of returning the sheet, is decided on the basis of the timing of switchback and the return distance.

For example, in the case of A4-size paper, as shown in Fig. 3B, the low rotational speed (reverse rotational speed) of the motor 71 at the time of returning the sheet is set at N2. For example, in the case of A5-size paper, the low rotational speed (reverse rotational speed) of the motor 71 at the time of returning the sheet is set at N3 which is a rotational speed lower than N2 (N3 < N2).

If the sheet is short, the timing for the trailing end of the sheet to depart from the post-fixing sensor lever 60s becomes earlier than the timing t7 as described above and the time period of exposure of the trailing end of the sheet on the paper ejection tray 15 at the time of returning becomes shorter. Accordingly, the time period to return the sheet at the ordinary speed (rotational speed N1) is shortened.

Specifically, because the return distance is fixed in this apparatus, a table for indicating the timing of turning off the post-fixing sensor lever 60s in accordance with any paper size, and the return time period due to the ordinary speed (rotational speed N1) and the reverse rotational speed (N2, N3 in the aforementioned example) due to the low speed correspondingly to the timing is provided in the control portion for controlling this apparatus in advance so that the return time period due to the ordinary speed (rotational speed N1) and the reverse rotational speed due to the low speed are decided in accordance with the timing of turning off the post-fixing sensor lever 60s.

According to this configuration, the sheet can be returned at a return speed to obtain an optimum condition, that is, to minimize the standby time period regardless of the size of the sheet.

Fig. 3C is a timing chart showing further preferred control.

This control is characterized in that when the sheet is to be returned, the sheet is first returned at a return speed (rotational speed N1) equal to the speed of transport (ordinary speed) at the time of transferring and then returned at a return speed lower than the ordinary speed (rotational speed N4) at a point of time t9 when the user cannot grasp (access) the trailing end of the sheet on the paper ejection tray 15. Then, the sheet is returned at a return speed (rotational speed N1) equal to the speed of paper feed toward the pair of gate rollers 10g (e.g. the speed of feeding the sheet toward the pair of gate rollers 10g by the pair of feed rollers 19 or the like so that the image can be transferred onto the rear face of the sheet when the other face of the sheet is a front face). This control as to the other points is the same as the control shown in Fig. 3B.

Specifically, when the sheet is to be returned, the motor 71 is first rotated reversely at a rotational speed N1 at a point of time t8 to return the sheet. Then, the sheet is returned at a return speed (rotational speed N4) lower than the ordinary speed at the point of time t9 when the use cannot grasp (access) the trailing end of the sheet on the paper ejection tray 15. The rotational speed N4 is lower than the transport speed (motor rotational speed N1) at the time of transferring an image onto the sheet and is lower than the rotational speed N2.

Then, at a point of time t13 when a predetermined time has passed after the point of time t9, the reverse rotational speed of the motor 71 is increased to the rotational speed N1 equal to the speed of feeding the sheet toward the pair of gate rollers 10g to thereby return the sheet toward the pre-gate sensor lever 10s and the pair of gate rollers 10g. The drive of the motor 71 is stopped at a point of time t15 when a predetermined time has passed after a point of time t14 when the pre-gate sensor lever 10s is turned on.

Also in this configuration, because the sheet is returned at a low speed (N4), the standby time period of the sheet (the stop time period of the sheet) in the return path 16 to feed the sheet to the transfer portion T2 is substantially from t15 to t17, so that the stop time period can be remarkably reduced compared with the stop time period t12 to t17 (Fig. 3A) at the time of ordinary control. Accordingly, the aforementioned operation and effect can be obtained.

When the leading end of the sheet returned according to this configuration abuts on the pair of gate rollers 10g, the return speed of the sheet becomes equal to the speed (corresponding to the rotational speed N1) of feeding the sheet toward the pair of gate rollers 10g by the feed roller 19 (or 82). Accordingly, the speed of the sheet abutting on the pre-gate sensor lever 10s and the pair of gate rollers 10g in the case where an image is transferred onto the rear face of the sheet becomes equal to the speed of the sheet abutting on the pre-gate sensor lever 10s and the pair of gate rollers 10g in the case where an image is transferred onto the front face of the sheet. For this reason, the leading end of the sheet can be set to a predetermined position (the sheet can be prevented from moving obliquely, that is, a skew removal) in the same condition.

Incidentally, the aforementioned process control is performed by a control portion not shown but provided in the body of the image forming apparatus.

The aforementioned image forming apparatus includes: an image forming portion for forming a monochrome image part on an intermediate transfer member 51 with every rotation of the intermediate transfer member 51 or superposing four-color image parts on the intermediate transfer member 51 with four rotations of the intermediate transfer member 51 to thereby form a color image on the intermediate transfer member 51; a transfer portion T2 by which the image formed on the intermediate transfer member 51 by the image forming portion is transferred onto a sheet; and a fixing portion 60 through which the sheet with the image transferred by the transfer portion T2 passes to fix the image on the sheet, wherein: the sheet having passed thorough the fixing portion 60 is transported onto a paper ejection tray 15, switched back to a return path 17 and returned to the transfer portion T2 so that an image can be also transferred onto the other face of the sheet; and when the image formed for the other face of the sheet by the image forming portion is a color image, the sheet is returned at a return speed lower than the speed of transport at the time of transferring in view of the whole of the return state.

According to this configuration, the standby time period of the sheet (the stop, time period of the sheet) in the return path 17 for supply to the transfer portion T2 can be shortened.

Accordingly, the time period of local contact between the sheet having passed through the fixing portion 60 so as to be heated at a high temperature and the constituent members (such as a guide member, a pair of return rollers for transporting the sheet, etc.) of the return path 17, especially, the time period of contact between the sheet and the pair of return rollers 72 for nipping and returning the sheet can be shortened. Because the amount of heat release from the contact portion can be reduced in this manner, the local temperature difference on the sheet can be reduced.

As a result, in this image forming apparatus, gloss irregularity at the time of forming a color image can be reduced to improve image quality.

In the image forming apparatus configured as described above so that the sheet is switched back to the return path 17 and returned to the transfer portion T2 after the sheet having passed through the fixing portion 60 is transported onto a paper ejection tray 15, there is a possibility that a user will grasp and take out a trailing end of the sheet because of the slow motion of the sheet (e.g. because the user mistakes the slow motion of the sheet for termination of a paper ejection operation) if the return speed is set at a low speed initially (in a state in which the user can grasp (access) the trailing end of the sheet on the paper ejection tray 15).

On the contrary, in the image forming apparatus according to this embodiment, the aforementioned disadvantage is eliminated because the sheet to be returned is returned at a return speed equal to the speed of transport (ordinary ejection speed) at the time of transferring and then returned at a return speed lower than the speed of transport at the time of transferring after the user cannot grasp (access) the trailing end of the sheet on the paper ejection tray 15.

Because the return speed and the return time period are decided on the basis of the timing of the switchback and the distance of the return, the sheet can be returned in an optimum condition regardless of the size of the sheet.

The image forming apparatus may further include a pair of gate rollers 10g provided in front of the transfer portion T2 and brought into contact with a leading end of the sheet to thereby set the leading end of the sheet to a predetermined position (prevent the sheet from moving obliquely, that is, a skew removal) and decide the timing of paper supply to the transfer portion T2. Accordingly, when the image formed for the other face of the sheet by the image forming portion is a color image, the sheet is first returned at a return speed lower than the speed of transport at the time of transferring and then returned at a return speed equal to the feed speed of the sheet to the pair of gate rollers 10g. In this case, the following operation and effect can be obtained.

That is, because the sheet to be returned is returned at a low speed in view of the whole of the return state, the standby time period of the sheet (the stop time period of the sheet) in the return path 17 to supply the sheet to the transfer portion T2 can be shortened so that the aforementioned operation and effect can be obtained.

When the leading end of the sheet returned according to this configuration abuts on the pair of gate rollers 10g, the return speed of the sheet becomes equal to the speed of feeding the sheet toward the pair of gate rollers 10g. Accordingly, the speed of the sheet abutting on the pair of gate rollers 10g in the case where an image is transferred onto the rear face of the sheet becomes equal to the speed of the sheet abutting on the pair of gate rollers 10g in the case where an image is transferred onto the front face of the sheet. For this reason, the leading end of the sheet can be ser to a predetermined position (the sheet can be prevented from moving obliquely, that is, a skew removal) in the same condition.

### [Fourth Embodiment]

When the image formed for the other face of the sheet by the image forming portion is a color image, the image forming apparatus of the fourth embodiment is characterized in that the pair of return rollers 72 are separated (retracted) from each other while the sheet is held in the return path 17 and on standby.

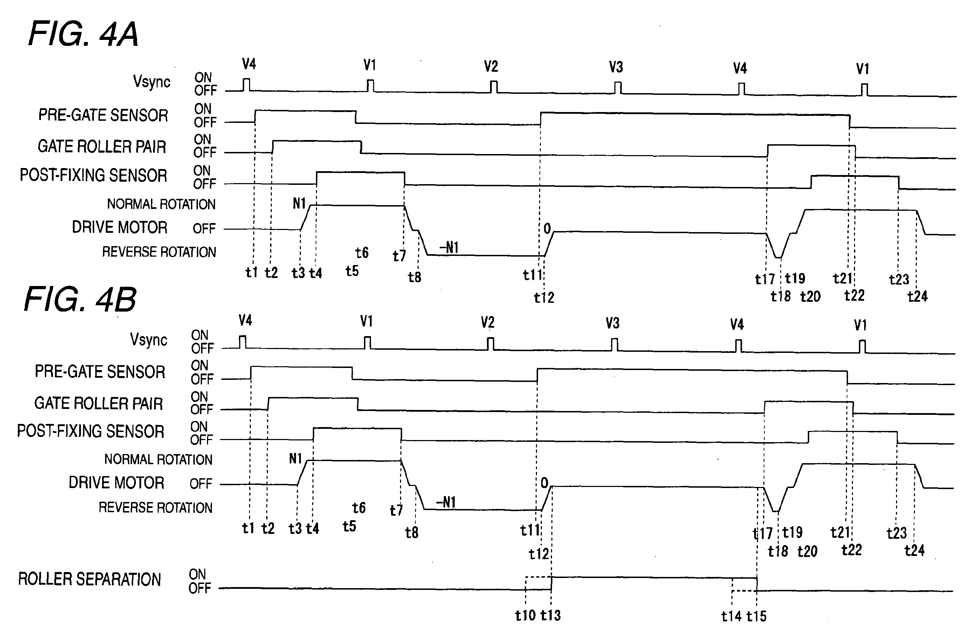

Fig. 4A is a timing chart in a comparative example (in the case where the pair of return rollers 72 are not separated from each other at the wait time of the sheet). Fig. 4B is a timing chart for explaining paper return control in the image forming apparatus of the fourth embodiment.

In Figs. 4A and 4B, at a point of time t2 when a predetermined time has passed after the point of time t1, more exactly, when a predetermined time has passed after the signal V4, the pair of gate rollers 10g are rotated to transport the sheet toward the secondary transfer portion T2. At a point of time t3, the motor 71 is rotated normally at a rotational speed N1 to rotate the pair of paper ejection rollers 91 and 92 and the pair of switchback rollers 93 normally to prepare for transport of the sheet.

In a process of transporting the sheet, an image is transferred onto the sheet in the secondary transfer portion T2. In a process in which the sheet passes through the fixing unit 60, the leading end of the sheet turns the post-fixing sensor lever 60s. In this manner, the "post-fixing sensor" signal is turned on at a point of time t4.

The pair of gate rollers 10g are stopped at a point of time t6 (when the trailing end of the sheet has passed through the pair of gate rollers 10g) when a predetermined time has passed after a point of time t5 when the trailing end of the sheet has passed through the pre-gate sensor lever 10s after the "post-fixing sensor" signal is turned on at the point of time t4.

At a point of time t7 when the trailing end of the sheet has passed through the post-fixing sensor lever 60s, the motor 71 is paused. At a point of time t8, the motor 71 is rotated reversely at a rotational speed N1 (ordinary speed) (-N1) to rotate the pair of paper ejection rollers 91 and 92, the pair of switchback rollers 93 and the pair of return rollers 72 reversely to switch back the sheet to start returning of the sheet to the return path 17 at an ordinary speed.

The aforementioned procedure is common with the respective cases. Control after the point of time t8 will be described in accordance with the cases because the control varies in accordance with the cases.

The case (comparative example) where the pair of return rollers 72 are not separated from each other will be described first to make description easily understandable.

As shown in Fig. 4A, the "pre-gate sensor" signal is turned on at a point of time t11 when the leading end (in the direction of movement) of the returned sheet turns the pre-gate sensor lever 10s after the sheet begins to return to the return path 17 at the ordinary speed at the point of time t8. The motor 71 is kept rotated reversely at the rotational speed N1 for a predetermined time after the point of time t11. After the leading end of the sheet is made to abut on the nip portion between the pair of gate rollers 10g stopped at this point of time so that oblique motion of the sheet is corrected, the motor 71 is stopped at a point of time t12.

Accordingly, the sheet is stopped at this point of time and kept in a standby state before four color image parts are superposed on the intermediate transfer belt 51 so as to be able to be transferred.

Then, at predetermined timing t17 based on the signal V4, the pair of gate rollers 10g are rotated and the motor 71 is once reversed to rotate the pair of return rollers 72 to supply the sheet toward the secondary transfer portion T2 again.

Then, at a point of time t18 when the trailing end of the sheet has passed through the pair of return rollers 72, the motor 71 is paused. At a point of time t19 before the leading end of the sheet reaches the pair of switchback rollers 93, the motor 71 is rotated normally at a rotational speed N1 to prepare for ejection of the sheet.

Then, at a point of time t20, the leading end of the sheet turns on the post-fixing sensor lever 60a. At a point of time t21 when the trailing end of the sheet has passed through the pre-gate sensor lever 10s, the pre-gate sensor lever 10s is turned off. Accordingly, the pair of gate rollers 10g are stopped at a point of time t22. The motor 71 is stopped at a point of time t24 when a predetermined time has passed after a point of time t23 when the trailing end of the sheet has passed through the post-fixing sensor lever 60s. In this manner, the paper ejection operation is completed.

As is obvious from the above description, in the control shown in Fig. 4A, the standby time period of the sheet (i.e. the stop time period of the sheet from t12 to t17) in the return path 17 until superposition of multiple color image parts on the intermediate transfer member 51 with rotations of the intermediate transfer member 51 becomes long.

For this reason, the time period of contact between the sheet having passed through the fixing portion 60 and heated at a high temperature and the pair of return rollers 72 provided in the return path 17 for nipping and returning the sheet becomes so long that heat of the sheet in the contact portion is greatly radiated to reduce the temperature of the contact portion compared with heat of the sheet in the other portion. As a result, gloss irregularity occurs in the image transferred and fixed on the sheet, so that image quality is lowered.

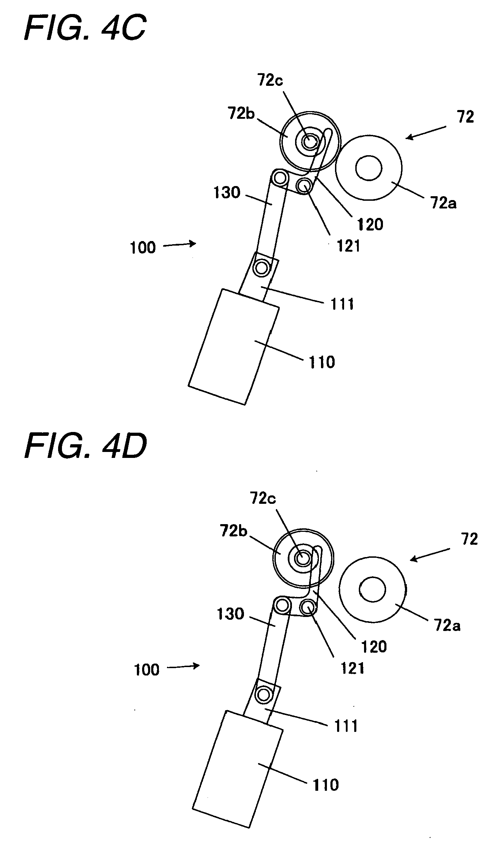

In this embodiment, therefore, the pair of return rollers 72 are provided with a separating mechanism 100 as shown in Figs. 5, 4C and 4D while control is made as shown in Fig. 4B.

Figs. 4C and 4D are views for explaining the configuration and operation of the separating mechanism 100.

As shown in Figs. 4C and 4D, the separating mechanism 100 has a solenoid 110, a lever 120, and a link 130. The solenoid 110 serves a means for operating this mechanism. The lever 120 engages with a shaft 72c of a follower roller 72b which is one of the return rollers 72. The link 130 connects the lever 120 and an operator 111 of the solenoid 110 to each other. The reference numeral 72a designates a drive roller actuated by the motor 71. The follower roller 72b is urged toward the drive roller 72a by an urging means not shown.

The lever 120 can rotate on the shaft 121. An end of the lever 120 is fitted to the shaft 72c of the follower roller 72b. The other end of the lever 120 is connected to the operator 111 through the link 130.

Accordingly, when the solenoid 110 is off so that pulling force does not act on the operator 111, the follower roller 72b comes into pressure contact with the drive roller 72a as shown in Fig. 4C. The sheet is nipped by the nip portion between the drive roller 72a and the follower roller 72b so that the sheet can be transported. When the solenoid 110 is on so that the operator 111 is pulled in, the lever 120 turns through the link 130 as shown in Fig. 4D. The follower roller 72b is separated from the drive roller 72a so that pressure of the nip portion for nipping the sheet is released.

The control shown in Fig. 4B is characterized as follows. At a point of time t12, the drive of the motor 71 is stopped. At a point of time t13 when the sheet is stopped, the solenoid 110 is turned on to separate the pair of return rollers 72 (separate the follower roller 72b from the drive roller 72a). At a point of time t15 before the pair of gate rollers 10g and the pair of return rollers 72 are rotated at a point of time t17, the solenoid 110 is turned off to bring the follower roller 72b into pressure contact with the drive roller 72a so that the sheet can be transported. Incidentally, the control after that is the same as the control shown in Fig. 4A.

As described above, when the pair of return rollers 72 are separated from each other to release the pressure nipping the sheet while the sheet is held in the return path 17 and on standby, the state of local nip pressure between the sheet having passed through the fixing portion 60 so as to be heated at a high temperature and the pair of return rollers 72 can be prevented so that the state of local heat radiation on the sheet can be prevented to thereby reduce the temperature difference on the sheet.

Preferably, as represented by the virtual line in Fig. 4B, the pair of return rollers 72 are separated from each other at a point of time t10 before a point of time t11 when the leading end of the sheet reaches the pair of gate rollers 10g (the pre-gate sensor lever 10s in Fig. 4B). At a point of time t14 before the point of time t15 before the pair of gate rollers 10g begin to supply the sheet to the transfer portion, the pair of return rollers 72 are brought into contact with each other to return the sheet toward the pre-gate sensor lever 10s and the pair of gate rollers 10g to make the leading end of the sheet abut on the pair of gate rollers 10g to thereby set the leading end of the sheet to a predetermined position.

According to this configuration, the leading end of the sheet can be set to a predetermined position surely and the sheet can be supplied again even in the case where the pair of return rollers are separated from each other at the wait time of the sheet.

That is, if the pair of return rollers 72 are separated from each other after the leading end of the sheet is set to a predetermined position (prevented from obliquely moving, that is, a stew removal) at a point of time t12, there is a possibility that the sheet will move obliquely again because the nip pressure acting on the sheet is released. When the pair of return rollers 72 are separated to stop the sheet temporarily at the point of time t10 before the point of time t11 when the leading end of the sheet reaches the pair of gate rollers 10g, and then the pair of return rollers 72 are brought into contact with each other to return the sheet toward the pre-gate sensor lever 10s and the pair of gate rollers 10g to make the leading end of the sheet abut on the pair of gate rollers 10g to thereby set the leading end of the sheet to a predetermined position at a point of time t14 before the point of time t15 before the pair of gate rollers 10g begin to supply the sheet to the transfer portion, the aforementioned disadvantage can be eliminated. Even in the case where the pair of return rollers 72 are separated from each other at the wait time of the sheet, the leading end of the sheet can be set to a predetermined position surely and the sheet can be supplied again.

Incidentally, the aforementioned process control is performed by a control portion not shown but provided in the body of the image forming apparatus.

As described above, the image forming apparatus includes: an image forming portion for forming a monochrome image part on an intermediate transfer member 51 with every rotation of the intermediate transfer member 51 or superposing four-color image parts on the intermediate transfer member 51 with four rotations of the intermediate transfer member 51 to thereby form a color image on the intermediate transfer member 51; a transfer portion T2 by which the image formed on the intermediate transfer member 51 by the image forming portion is transferred onto a sheet; and a fixing portion 60 through which the sheet with the image transferred by the transfer portion T2 passes to fix the image on the sheet, wherein: the sheet having passed thorough the fixing portion 60 is switched back to a return path 17 and returned to the transfer portion T2 by a pair of return rollers 72 so that an image can be also transferred onto the other face of the sheet; when the image formed for the other face of the sheet by the image forming portion is a color image, the pair of return rollers 72 are separated from each other at the wait time of the sheet in the return path 17.

Accordingly, the state of local nip pressure between the sheet having passed through the fixing portion 60 so as to be heated at a high temperature and the pair of return rollers 72 can be prevented, so that the state of local heat radiation on the sheet can be prevented to thereby reduce the temperature difference on the sheet.

As a result, the image forming apparatus permits gloss irregularity to be reduced at the time of color image forming to thereby improve image quality.

The pair of return rollers 72 are separated from each other at a point of time t10 before a point of time t11 when the leading end of the sheet reaches the pair of gate rollers 10g (the pre-gate sensor lever 10s in Fig. 4B). At a point of time t14 before the point of time t15 before the pair of gate rollers 10g begin to supply the sheet to the transfer portion, the pair of return rollers 72 are brought into contact with each other to return the sheet toward the pre-gate sensor lever 10s and the pair of gate rollers 10g to make the leading end of the sheet abut on the pair of gate rollers 10g to thereby set the leading end of the sheet to a predetermined position. Accordingly, the leading end of the sheet can be set to a predetermined position surely and the sheet can be supplied again even in the case where the pair of return rollers 72 are separated from each other at the wait time of the sheet.

Although embodiments of the invention have been described, the invention is not limited to the embodiments and modifications may be made suitably without departing from the gist of the invention.

## Claims

1. An image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again; and
a transport controller, operable to transport the medium with a first speed when the medium first passes through the image former, and to transport the medium in the second path with a second speed lower than the first speed, in a case where the image to be formed on the medium which has passed through the second path is a multiple color image.

2. The image forming apparatus according to claim 1, further comprising
a gate roller, disposed between the image former and a connecting point of the first path and a downstream end of the second path in a direction in which the medium is transported in the second path, the gate roller operable to control a timing that the medium is transported to the image former,
wherein the transport controller is operable to transport the medium with the first speed, before the medium which has entered the second path passes the gate roller again.

3. The image forming apparatus according to claim 1, wherein the second speed is variable.

4. An image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again; and
a transport controller, operable to transport the medium through the second path while stopping intermittently, in a case where the image to be formed on the medium which has passed though the second path is a multiple color image.

5. The image forming apparatus according to claim 4, further comprising
an ejection tray, adapted to receive the medium ejected from the first path,
wherein the transport controller is operable to eject a part of the medium which has once passed through the image former to the ejection tray, and to continuously pull the medium into the second path such an extent that a user cannot access the ejected part of the medium.

6. The image forming apparatus according to claim 4, wherein
a time period for which the medium is stopped at a downstream part in the second path in a direction in which the medium is transported in the second path is longer than a time period for which the medium is stopped at an upstream part in the second path in the direction.

7. An image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again;
an ejection tray, adapted to receive the medium ejected from the first path; and
a transport controller, operable:
to transport the medium with a first speed when the medium first passes through the image former;
to eject a part of the medium which has once passed through the image former to the ejection tray, and to continuously pull the medium into the second path with the first speed such an extent that a user cannot access the ejected part of the medium; and
to transport the medium in the second path with a second speed lower than the first speed, in a case where the image to be formed on the medium which has passed through the second path is a multiple color image.

8. The image forming apparatus according to claim 7, further comprising
a gate roller, disposed between the image former and a connecting point of the first path and a downstream end of the second path in a direction in which the medium is transported in the second path, the gate roller operable to control a timing that the medium is transported to the image former,
wherein the transport controller is operable to transport the medium with the first speed, before the medium which has entered the second path passes the gate roller again.

9. The image forming apparatus according to claim 7, wherein
the second speed is variable.

10. An image forming apparatus comprising:
a first path, adapted to transport a medium;
an image former, disposed in the first path, and operable to form an image on the medium transported therethrough;
a second path, adapted to transport the medium, which has once passed through the image former, while turning inside out, thereby allowing the medium to pass through the image former again;
a pair of rollers, disposed in the second path, and adapted to nip the medium transported therethrough, the rollers being separatabe from each other; and
a transport controller, operable to stop the medium within the second path for a predetermined time period while separating the rollers from each other, in a case where the image to be formed on the medium which has passed through the second path is a multiple color image.
